# EUROPÄISCHE PATENTSCHRIFT

(11) **EP 2 294 016 B1**
(45) Veröffentlichungstag und Bekanntmachung des Hinweises auf die Patenterteilung: **10.08.2016**
(21) Anmeldenummer: 09768915.2
(22) Anmeldetag: 12.06.2009
(51) Int. Cl.: C02F 1/463, C02F 1/32, C02F 1/74

(54) **VERFAHREN UND VORRICHTUNG ZUR WASSERAUFBEREITUNG**
METHOD AND DEVICE FOR WATER TREATMENT
PROCÉDÉ ET DISPOSITIF DE TRAITEMENT DE L EAU

(30) Priorität: 24.06.2008 DE 102008029923
(43) Veröffentlichungstag der Anmeldung: 16.03.2011
(73) Patentinhaber: Blum, Holger, 9053 Teufen (CH)
(72) Erfinder: Blum, Holger, 9053 Teufen (CH)
(74) Vertreter: Puschmann Borchert Bardehle Patentanwälte Partnerschaft mbB
(86) Internationale Anmeldenummer: PCT/EP2009/004259
(87) Internationale Veröffentlichungsnummer: WO 2009/156066

(56) Entgegenhaltungen:
- WO-A-2005/028377
- WO-A-2006/060856
- WO-A-2006/108073
- JP-A- 8 132 051
- US-A1- 2006 108 273
- TARASEVIC, Y. I.: "Natural zeolites in water treatment processes", SOVIET JOURNAL OF WATER CHEMISTRY AND TECHNOLOGY, vol. 10, no. 3, 1988, pages 22-32, XP008165596, ISSN: 0734-1679

## Beschreibung

Die Erfindung betrifft ein Verfahren und eine Vorrichtung zur Wasseraufbereitung, und insbesondere eine Aufbereitungsanlage zu Reinigung einer Schmutzflüssigkeit von Feinstteilchen bis zu kleiner als 20 p Durchmesser und gelösten Schadstoffen.

Eine moderne Wasseraufbereitung soll Trinkwasser liefern, das qualitativ einem natürlichen Trinkwasser entspricht. In einer Trinkwasseraufbereitungsanlage wird Rohwasser bzw. Schmutzwasser prozessmäßig mit physikalischen, biologischen und chemischen Wirkmechanismen so behandelt, dass am Ende der Aufbereitung Trinkwasser entsprechend den geforderten Vorgaben zur Verfügung steht.

Eine natumahe Trinkwasseraufbereitung sollte sich an den Prozessen orientieren, die auch in der Natur zur Reinigung des Wassers ablaufen.

Es ist bereits bekannt, dass Abwasser aus einer biologischen Kläranlage, welches Feinstteilchen kleiner als 20 µ und gelöste Schadstoffe enthält, gereinigt werden kann, indem das Abwasser durch eine Elektroflockulationszelle mit beweglichen Elektroden nach PCT/EP/2006/005384 geleitet wird und das erhaltene Flockulat hinter der Elektroflockulationszelle unmittelbar in eine Filter- und Sterilisiervorrichtung nach DE-U- 20 2006 019 492 geleitet wird.

Dieses Verfahren zur Wasseraufbereitung mittels Elektroflockulationszelle und daran anschließend hydraulisch in Serie geschalteter, Schwerkraftfiltervorrichtung und Ultraviolettdurchflusszelle ist beschrieben von Dr. J. Strunkheide und A. Höcherl in der Zeitschrift WWT (Wasserwirtschaft Wassertechnik) 4/2008 Seiten 10 bis 14 , unter dem Titel" Aufbereitung von Prozessabwasser"; ISSN 1438-5716.

Die Wasserreinigung gemäß vorstehend beschriebener Verfahrensweise ist nur mit einem Bruchteil des Kostenaufwandes verbunden welcher für so genannte Umkehrosmoseverfahren bereitzustellen ist, da Energie und Materialaufwand sehr gering sind.

Die vor beschriebenen Wasseraufbereitungsanlage weist den Nachteil auf, dass eine Nachregelung der Parameter der einzelnen sequentiellen Apparatestufen während des Betriebes der Anlage erforderlich ist, sobald das Produkt aus Schmutzfracht und Durchflussmenge des Rohwassers die so genannte Schmutzfrachtbelastung wesentlich von einem vorher festgelegten Wert abweicht.

Diese Nachregelung erfordert einen zusätzlichen manuellen oder automatischen Eingriff in die Betriebsparameter der Elektroflockulationszelle wie z. B. die Änderung der Strombelastung oder die Änderung der Zellenspannung. Unterbleibt diese Nachregelung so treten Abweichungen von der geforderten Reinheit im Ablauf des letzten Elements der Wasseraufbereitungsanlage, der Ultraviolettdurchflusszelle auf.

Durch die Erfordernis der Nachregelung bei schwankender Schmutzfracht des Rohwassers wird der Personalaufwand und der Aufwand an Kontroll- und Überwachungsgeräten in ungünstiger Weise erhöht wodurch die Vorteile der Vorrichtung zur Wasserreinigung gemäß WWT (Wasserwirtschaft Wassertechnik) 4/2008 Seiten 10 bis 14 in bedenklicher Weise gemindert wird.

Die WO 2006/108073 A1 bezieht sich auf ein Verfahren und eine Vorrichtung für die Entgiftung von Flüssigkeiten, insbesondere die Entfernung der Schwermetalle und/oder Arsen und/oder ihre Verbindungen aus Wasser, mittels Elektrolyse, wobei das Wasser an den Elektroden mit unterschiedlichen Polaritäten gereinigt wird. Mittel zur Steuerung des pH Wertes der Flüssigkeit und Steuerungssysteme werden angegeben, die eine Selbstreinigung der Elektroden, eine Selbstreinigung der Filter und eine automatische Überwachung der Wartungszustände erlauben.

Die WO 2005/028377 betrifft Verfahren zum Reinigen von Abwasser, wobei das Abwasser durch eine Elektrokoagulationzelle geleitet wird, die eine Mehrzahl Reaktionsplatten oder der Elektroden umfasst, die innerhalb der Zelle von einander beabstandet angeordnet sind. Das Abwasser wird behandelt, indem ein elektrischer Strom durch das Abwasser geleitet wird. Wiederverwenden des gereinigten

Wassers, damit Reinigung oder sonstige Zwecke Abwasser erzeugen. Es erfolgt ein Recycling des Abwassers zurück zu der Elektrokoagulationzelle.

Die WO 2006/060856 A1 betrifft eine Vorrichtung zur Aufbereitung von Abwasser, die eine Vorbehandlungs-Vorrichtung für Aufbereitung des Abwassers hat, die zwei Abscheidungstanks hat, durch die das Abwasser geleitet wird. Einem vertikal angeordnetes Leitblechrohr ist hat eine geschlossene Oberseite und eine offene Unterseite und ist an eine Seitenwand eines ersten Tanks angeschlossen, in dem Triglyzeride, Fette oder sonstige partikuläre Verunreinigungen im Abwasser für nachfolgenden Durchgang in einen zweiten Tank abgeschieden werden. Die Vorrichtung umfasst auch eine Nachbehandlungsvorrichtung für Aufbereitung des Abwassers, nachdem es durch eine Elektrokoagulationzelle, mindestens einen Koagulationstank geleitet worden ist. Eine Sprühdüse ist vorgesehen, um Flockulat von dem Innere des Tanks auszuwaschen. Das Flockulat wird durch ein Rohr abgeleitet, dass sich durch eine Seitenwand des Tanks unter das Leitblech erstreckt.

In dem Dokument TARASEVIC, Y. I.: "Natural zeolites in water treatment processes", Soviet Journal of Water Chemistry and Technology, Bd. 10, Nr. 1988, Seiten 22-32, XP008165596, ISSN: 0734-1679 offenbart Zeolith als Filtermaterial, wobei dieses Material als besonders geeignet für Hochwasser bezeichnet wird.

Es ist die Aufgabe der Erfindung ein Verfahren und eine Vorrichtung zur Wasseraufbereitung bereitzustellen, welche die Vorteile der Verfahrensweise, wie in WWT (Wasserwirtschaft Wassertechnik) 4/2008 Seiten 10 bis 14 beschrieben aufweist, ohne eine Nachregelung der Parameter der einzelnen sequentiellen Apparatestufen während des Betriebes der Anlage ausführen zu müssen. Eine weitere Aufgabe der Erfindung ist es die eine Vorrichtung zur Wasseraufbereitung bereitzustellen, welche bei gleicher Durchsatzleistung räumlich kompakter ist als die Anlage, welche in WWT (Wasserwirtschaft Wassertechnik) 4/2008 Seiten 10 bis 14 beschrieben ist.

Zu Lösung dieser Aufgabe werden erfindungsgemäß ein Verfahren, das die Merkmale von Anspruch 1 aufweist, zur Aufbereitung von Schmutzwasser angegeben.

Vorteilhafte Ausgestaltungen der Erfindung sind in den Unteransprüchen charakterisiert.

Das erfindungsgemäße Verfahren hat den Vorteil, dass es in einer kompakt aufgebauten Anlage ausgeführt werden kann. Durch den Reifeprozess in dem Reifetakt wird das Elektroflockulat in einen leicht filtrierbaren Zustand mit guter Rückspülfähigkeit überführt, was ebenfalls zur Kompaktheit der erforderlichen Anlage beiträgt. Da das Elektroflockulat mit Luft angereichert, wird bevor es in den Filter gefördert wird, wird die Filtration des Elektroflockulats weiter verbessert. Ferner ist das Verfahren so ausgelegt, dass eine Nachregelung der Parameter der einzelnen sequenziellen Apparatestufen während des Betriebs der Anlage nicht erforderlich ist.

Eine weitere vorteilhafte Ausgestaltung der Erfindung ist dadurch gekennzeichnet, dass die Verweilzeit des Elektroflockulats in dem Reifetank etwa 0,5 bis 3 Stunden beträgt, was sich in vorteilhafter Weise als eine ausreichende Zeitspanne erwiesen hat, damit der Reifeprozess in dem Reifetank mit einem vorteilhaften Ergebnis abgeschlossen werden kann.

Eine weitere vorteilhafte Ausgestaltung der Erfindung ist dadurch gekennzeichnet, dass das Wasser unter Druck durch den Filter befördert wird, wodurch der Durchsatz durch die Anlage verbessert wird.

Eine weitere vorteilhafte Ausgestaltung der Erfindung, ist dadurch gekennzeichnet, dass in dem Filter ein Überdruck aufgebaut wird, der ausreicht, dass das Elektroflockulat durch das Filterbett gedrückt wird.

Zur Lösung der vorgenannten Aufgabe wird erfindungsgemäß eine Vorrichtung, die die Merkmale von Anspruch 6 aufweist, zur Aufbereitung von Schmutzwasser bereitgestellt

Weiterhin gelangt man auf dem erfindungsgemäßen Weg zu einem geringen Flächenbedarf der gesamten Vorrichtung zur Wasseraufbereitung, da sehr viel Raum durch den Fortfall der Schwerkraftfiltervorrichtung eingespart wird.

Die vorliegend beschriebene kompakte Vorrichtung zur Wasseraufbereitung bietet eine überraschende Anzahl von wichtigen technischen Vorteilen. Bei der erfindungsgemäßen Vorrichtung zur Wasseraufbereitung sind keine personellen oder technischen Maßnahmen zur Nachregelung der Betriebsparameter erforderlich, wenn die Schmutzfrachtbelastung des Rohwassers starken Schwankungen unterliegt.

Dadurch werden die Herstellung und die Konstruktion der erfindungsgemäßen Vorrichtung zur Wasseraufbereitung wesentlich vereinfacht. Deren Elektroflockulationszelle kann nunmehr in wenigen Größeneinheiten standardisiert werden wodurch das Problem der Ersatzbeschaffung und des Austausches verbrauchter Zellen beseitigt bzw. minimiert wird.

Eine weitere Sicherung für außergewöhnliche Betriebszustände besteht darin, dass die erfindungsgemäße Vorrichtung zur Wasseraufbereitung während des Betriebes weitgehend immun ist gegen Unterbrechung der Rohwasserzufuhr oder gegen Stromausfall, wodurch die Vorrichtung selbsttätig in den Wartezustand zwischen zwei Filtrationszyklen übergeht.

Die Elektroflockulationszelle ist mit beweglichen Elektroden ausgebildet und weist einen Zulauf für Schmutzwasser und einen Ablauf für Elektroflockulat auf.

Durch die Bewegung der Elektroden kann in vorteilhafter Weise verhindert werden, dass der Filter verstopft.

Eine weitere vorteilhafte Ausgestaltung der erfindungsgemäßen Vorrichtung ist dadurch gekennzeichnet, dass die Elektroflockulationszelle eine obere und eine untere Elektrode aufweist, die bewegbar sind, wobei die untere Elektrode ein Bett aus Metallteilchen aufweist und die obere Elektrode aus Metall mechanisch in Schwingungen zu versetzen ist, insbesondere durch die Tatsache, dass die untere Elektrode durch ein Bett aus Metallteilchen gebildet wird, kann Elektrodenmaterial leicht ersetzt werden, wenn das vorher vorhandene Elektrodenmaterial verbraucht worden ist.

Eine weitere vorteilhafte Ausgestaltung der erfindungsgemäßen Vorrichtung ist dadurch gekennzeichnet, dass der Reifetank als druckloser Tank ausgebildet ist.

Eine weitere vorteilhafte Ausgestaltung der erfindungsgemäßen Vorrichtung ist dadurch gekennzeichnet, dass der Filter einen Druckbehälter aufweist. Aufgrund des einfachen kompakten Aufbaus des Druckfiltertanks ist der Wartungsaufwand sehr gering und hat nur minimalen hydraulischen Energieverbrauch zur Folge.

Eine weitere vorteilhafte Ausgestaltung der erfindungsgemäßen Vorrichtung ist dadurch gekennzeichnet, dass der Filter rückspülbar ist. Dadurch wird eine verlängerte Lebensdauer des Filters sichergestellt, indem der Filter bei Bedarf durch Rückspülung wieder in einen voll funktionsfähigen Zustand versetzt wird.

Eine weitere vorteilhafte Ausgestaltung der erfindungsgemäßen Vorrichtung ist dadurch gekennzeichnet dass die körnige Filtermasse aus dem Zeolithmineral Clinoptilolith in einer Reinheit von mindestens 94 Gew% Clinoptilolith besteht. Durch diesen Reinheitsgrad des Clinoptiloliths wird der Filterwirkungsgrad optimiert.

Eine weitere vorteilhafte Ausgestaltung der erfindungsgemäßen Vorrichtung ist dadurch gekennzeichnet, dass ein druckloser Reinwassertank vorgesehen ist, der das Rückspülwasser für den Filter enthält. Durch den Reinwassertank ist es möglich, das reine Wasser zwischen zu speichern, bevor es aus der Anlage abgeführt wird. Das reine Wasser kann dann, wenigstens teilweise notwendigenfalls in der Anlage selbst genutzt werden. Damit wird in vorteilhafter Weise das für die Rückspülung des Filters benötigte, reine Wasser zur Verfügung gestellt.

Eine weitere vorteilhafte Ausgestaltung der erfindungsgemäßen Vorrichtung ist dadurch gekennzeichnet, dass der Reinwassertank das 4- bis 6-fache Volumen des Filters hat, sodass bei einer Rückspülung genügend Wasser zur Verfügung steht, ohne dass der Reinwassertank leer läuft.

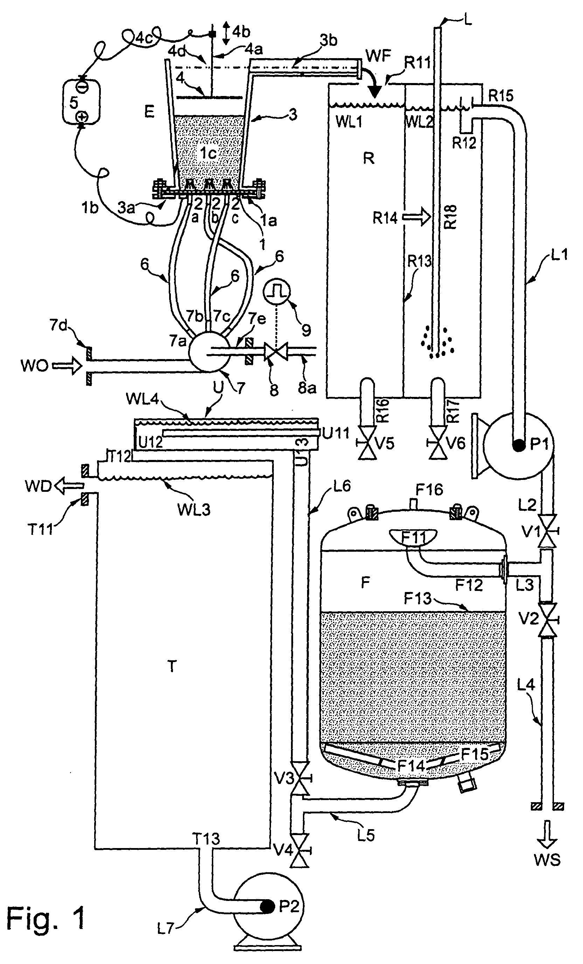

Ausführungsbeispiele der Erfindung werden an Hand der beigefügten Figur 1 erläutert, die schematisch das Fliessschema der erfindungsgemäßen Vorrichtung zur Wasseraufbereitung zeigt.

Die Erfindung bezieht sich auf Flüssigkeiten aller Art, sie wird jedoch im Folgenden anhand der Aufbereitung von Wasser erläutert, da dieser Bereich ein wesentliches Einsatzgebiet ist. Die Aufbereitung von Wasser ist zum einen für Brauchwasser und Wasser, das in Teichen oder Aquarien eingesetzt wird sowie insbesondere für die Bereitstellung von Trinkwasser notwendig. Ein wesentliches Einsatzgebiet der erfindungsgemäßen Vorrichtungen ist aber die Aufbereitung von Oberflächenwasser zur Bereitstellung von Trinkwasser, weswegen die nachfolgende Beschreibung auf diesem Einsatzgebiet aufgebaut wird.

Wie aus Figur 1 zu ersehen ist, fließt der Rohwasserstrom WO durch einen Stutzen 7d in ein Verteilerrohr 7 und fließt aus den Ausflussstutzen 7a, 7b, 7c durch die flexiblen Isolierstoffschläuche 6 in die Isolierstoffdüsen 2a, 2b, 2c.

Die Isolierstoffdüsen 2 enthalten Löcher oder Schlitze aus denen das Rohwasser in das Anodengranulat eintritt. Die Isolierstoffdüsen 2 sind in die Stützplatte 1 so eingesetzt, dass genügend metallische Kontaktfläche 1a aus Edelmetall zur Verfügung steht, um mit dem Anodengranulat 1 eine sichere elektrische Verbindung zu gewährleisten.

Wie aus Figur 1 zu ersehen ist, befindet sich das metallische Anodengranulat 1c in einem Zellenkasten 3, welcher nach oben hin schwach erweitert ist. Der Zellenkasten hat eine oder mehrere Ablauföffnungen 3b und ist bis zum Flüssigkeitsspiegel 4d mit Wasser gefüllt. Oberhalb des Anodengranulat 1c aber unterhalb des Flüssigkeitsspiegels 4d sind ein oder mehrere Metallgitter 4 mittels Halterung 4a angebracht. Die Halterungen 4a dienen auch gleichzeitig als Halterung für die Stromzuführung zu dem Metallgitter 4. Durch einen mechanischen Rüttler oder Vibrator 4b wird das Metallgitter in periodische Schwingungen versetzt. Das Stromzuführungskabel 4c ist mit dem negativen Pol des Gleichstromgenerators 5 verbunden.

Das Anodengranulat lagert auf der Edelmetallschicht 1 a, mit welchem die Stützplatte 1 beschichtet ist. Die Stützplatte 1 ist mittels des Flansches 3a Flüssigkeitsdicht am Zellen kasten 3 befestigt. Die metallische Stützplatte 1 ist weiterhin durch das Stromkabel 1 b mit dem Pluspol des Gleichstromgenerators 5 verbunden.

Darüber hinaus weist der Rohrverteiler wenigstens zwei in den Rohrverteiler hineinragende Gasinjektoren für die pulsförmige Zuführung von Treibgas auf die mit 7e bezeichnet sind. Als Treibgas wird vorzugsweise komprimierte Luft oder komprimierter Stickstoff eingesetzt.

Eine Impulssteuerung 9 öffnet kurzzeitig das Gasventil 8 welches mit der Hochdruckleitung für Treibgas 8a verbunden ist. Infolgedessen gelangt eine bestimmte Menge Treibgas in den mit Rohwasser gefüllten Rohrverteiler 7 und sammelt sich auf Grund der hydraulischen Zustände hauptsächlich im oberen Rohrteil des horizontal gelagerten Rohrverteilers 7. Dementsprechend tritt die pulsförmig injizierte Gasmenge hauptsächlich durch die Auslaßstutzenreihe b entsprechend eine Teilmenge des Gases durch den Auslaßstutzen 7b aus. Durch die Intervallweise Zufuhr von Pressluft in das Elektrodengranulat 1c wird dieses in langsamer Bewegung gehalten, so dass kein Verstopfen der Zelle E oder eine ungleichmäßige Entladung der Feinteilchen stattfinden kann.

Infolge der großen spezifischen Oberfläche des Elektrodengranulates 1c werden die kleinsten Mikroorganismen und suspendierten Feinteilchen beim Durchströmen von WF durch E sofort elektrisch entladen und ballen sich zusammen. Gleichzeitig entsteht aus den Anodengranulat 1c in Wasser suspendiertes Metallhydroxid welches aus den zusammengeballten Feinteilchen filtrierbare Flocken erzeugt.

Das Elektroflockulat WF fließt aus E über den Ablaufstutzen 3b durch die Zuflussöffnung R11 in den Reifetank R. Der Reifetank R ist durch die Zwischenwand R13 in zwei Tankvolumina aufgeteilt. Eine Tankhälfte ist bis zum Flüssigkeitsspiegel WL1 mit Elektroflockulat gefüllt. Durch den Schlitz R14 in der Zwischenwand R13 fließt das Elektroflockulat WF in die zweite Tankhälfte, die bis zum Flüssigkeitsspiegel WL2 mit Elektroflockulat gefüllt ist. Grobe Teile, die aus der Zelle E in den Reifetank R gespült werden sinken zu Boden und können
durch die Leitungen R16 und R17 mittels der Ventile V5 und V6 von Zeit zu Zeit aus dem Reifetank R abgelassen werden. Durch den Reifeprozess in R wird das Elektroflockulat WF in einen leicht filtrierbaren Zustand mit guter Rückspülfähigkeit überführt.

Durch die Rohrleitung R18 wird Luft L in den Untertank des Reifetanks R eingeblasen, um das Elektroflockulat mit Luft zu behandeln.

Das gereifte Elektroflockulat fließt aus dem Reifetank R durch den T-Stutzen R15 in die Ansaugleitung L1 zur Filterpumpe P1. In der Filterpumpe P1 wird das gereifte Elektroflockulat WF auf Filterdruck gebracht und tritt am Auslassstutzen der Pumpe P1 durch die Leitung L2 und das geöffnete Absperrventil V1 in den Filterstutzen L3 des Druckfilters F aus. Das Absperrventil V2 ist geschlossen, wodurch gereiftes Elektroflockulat WF zwangsweise durch die Filterleitung F12 und aus dem Flüssigkeitsverteiler F11 in den Filterraum von F oberhalb des Filterbett F13 fließt.

Das Filterbett F13 besteht aus lose geschütteter körniger Filtermasse. Beim Durchgang von oben nach unten durch das Filterbett F13 verliert das Elektroflockulat WF alle suspendierten Teile und das in der Elektroflockulationszelle E erzeugte suspendierte Metallhydroxid sowie bestimmte Schadstoffe, die sich an das erzeugte Metallhydroxid chemisch oder durch Van der Waalsche Kräfte gebunden haben.

Das so gereinigte Filtrat tritt durch die Schlitze der Filterkerzen F15 in den Sammler F14 und verlässt den Druckfilter F durch die Filtratwasserleitung L5. Während des Filterbetriebes ist das an die Leitung L5 angeschlossene Ventil V3 geöffnet, während das Absperrventil V4 geschlossen ist. Infolgedessen fliest das Filtratwasser aus dem Druckfilter F durch das Ventil V3 in die Leitung L6, welche zum Eingangstutzen U 13 der UV-Licht-Aufbereitungsvorrichtung U führt.

Die UV-Licht-Aufbereitungsvorrichtung U hat die Form eines kastenförmigen Kanals, in dem waagerecht unterhalb des Flüssigkeitsspiegels WL4 ein oder mehrere Ultraviolettstrahler U11 angebracht sind. Das durch den Einlassstutzen U13 eintretende Filtrat fließt an einem oder mehreren Ultraviolettstrahlern U11 entlang und tritt aus der UV-Licht-Aufbereitungsvorrichtung U über das Überlaufwehr U12 als steriles Reinwasser durch die Öffnung T12 in den Reinwassertank T aus.

Während des Filterbetriebes ist der Reinwassertank T bis zum Flüssigkeitsspiegel WL3 mit Reinwasser gefüllt. Der Reinwasserstrom WD verlässt den Reinwassertank T durch den Ablaufstutzen T11.

Nach Ablauf eines bestimmten Zeitintervalls ist die Kapazität des Filterbettes F13 erschöpft und der Filter F muss einige Minuten rückgespült werden. Dazu wird der Zufluss von Rohwasser WO unterbrochen, und das Ventil V1 und das Ventil V3 werden geschlossen, und die Pumpe P1 wird ausgeschaltet. Das Ventil V2 und das Ventil V4 werden geöffnet, und die Pumpe P2 wird eingeschaltet.

Durch den Ablaufstutzen T13 des Reinwassertanks T gelangt Reinwasser durch die Leitung L7 in die Pumpe P2 und wird durch das geöffnete Ventil V4 und die Leitung L5 in den Verteilerkopf F14 gepumpt. Der Reinwasserstrom fließt aus den Filterverteilern F15 von unten nach oben durch das Filterbett F13, welches dadurch expandiert. Der Freiraum im expandierten Filterbett F13 ermöglicht, dass alle auf den Filterkörnern abgelagerten Partikel und koagulierten Stoffe mit dem Spülwasserstrom nach oben fließen. Durch F11 , F12 L3 und das geöffnete Ventil V2 verlässt der Spülwasserstrom WS die erfindungsgemäße Vorrichtung zur Wasseraufbereitung durch die Leitung L4.

Nach Beendigung des Rückspülvorganges wird der Zufluss von Rohwasser WO fortgesetzt, und das Ventil V1 und das Ventil V3
werden geöffnet. und die Pumpe P1 wird eingeschaltet. Das Ventil V2 und das Ventil V4 werden geschlossen und die Pumpe P2 wird ausgeschaltet.

Erfindungsgemäß arbeitet die Vorrichtung zur Wasseraufbereitung mit Zeolith als körniger Filtermasse F13. Insbesondere wird für die die körnige Filtermasse der erfindungsgemäßen Vorrichtung das Zeolithmineral Clinoptilolith in einer Reinheit von mindestens 94 Gew% Clinoptilolith verwendet. Beispiel:
Der Raumbedarf für eine erfindungsgemäße Vorrichtung zur Trinkwassergewinnung aus einem Fluss, einem See oder einem Teich für 1000 Einwohner entsprechend 200 Kubikmeter Trink- und Brauchwasser pro Tag:
   Die erfindungsgemäße Vorrichtung zur Wasseraufbereitung nach der in Figur 1 beschriebenen Verfahrensweise ist so kompakt, dass die gesamte in Figur 1 beschriebene Vorrichtung inklusive dem dazugehörigen rückspülbaren Druckfilter mit Filtermasse aus körnigem Zeolith in einen Standard-20-Fuß-Container passt.

Weiters arbeitet die erfindungsgemäße Vorrichtung auch bei stark schwankender Schmutzfrachtbelastung des Rohwassers störungsfrei, bedarf keiner ständigen Aufsicht und benötigt nur etwa 20% des elektrischen Energiebedarfs vergleichbarer Wasseraufbereitungsanlagen.

## Patentansprüche

1. Verfahren zur Aufbereitung von Schmutzwasser, bei dem
- das Schmutzwasser in eine Elektroflockulationszelle (E) eingeleitet und dort einer Elektroflockulation unterworfen wird,
- das in der Elektroflockulationszelle verarbeitete Elektroflockulat (WF) in einen Reifetank (R) eingeleitet wird und dort verweilt, und
- das aus dem Reifetank stammende Elektroflockulat (WF) in einem Filter (F) gefiltert wird,
**dadurch gekennzeichnet, dass** die Elektroflockulationszelle (E) mit beweglichen Elektroden und einem Bett aus Metallteilchen aus Gußeisenspänen oder aus Magnesiumgranulat oder aus Aluminiumgranulat oder aus einer gekörnten Aluminium-Magnesiumlegierung und mit einem Zulauf für Schmutzwasser (WO) und einem Ablauf für Elektroflockulat (WF) ausgebildet wird, dass das Elektroflockulat (WF) in dem Reifetank (R) mit Luft angereichert wird, bevor es in den Filter (F) gefördert wird, und dass
in dem Filter (F) ein Filterbett (F13) mit beweglicher, körniger Filtermasse aus Zeolith, vorzugsweise Clinoptilolith, verwendet wird.

2. Verfahren nach Anspruch 1, **dadurch gekennzeichnet, dass** Clinoptilolith in einer Reinheit von mindestens 94 Gew% Clinoptilolith verwendet wird.

3. Verfahren nach Anspruch 1, **dadurch gekennzeichnet, dass** die Verweilzeit des Elektroflockulats (WF) in dem Reifetank (R) etwa 0,5 bis 3 Stunden beträgt.

4. Verfahren nach Anspruch 1, **dadurch gekennzeichnet, dass** das Wasser unter Druck durch den Filter (F) befördert wird.

5. Verfahren nach Anspruch 1, **dadurch gekennzeichnet, dass** in dem Filter (F) ein Überdruck aufgebaut wird, der ausreicht, das Elektroflockulat (WF) durch das Filterbett zu drücken.

6. Vorrichtung zur Aufbereitung von Schmutzwasser umfassend:
eine Elektroflockulationszelle (E),
einen der Elektroflockulationszelle (E) nachgeschalteten Reifetank (R),
einen dem Reifebehälter nachgeschalteten Filter (F),
**dadurch gekennzeichnet, dass**
die Elektroflockulationszelle (E) mit beweglichen Elektroden und einem Bett aus Metallteilchen aus Gußeisenspänen oder aus Magnesiumgranulat oder aus Aluminiumgranulat oder aus einer gekörnten Aluminium-Magnesiumlegierung ausgebildet ist und einen Zulauf für Schmutzwasser (WO) und einem Ablauf für Elektroflockulat (WF) aufweist, dass
der Reifetank (R) ein Belüftungselement (R18) zur Zufuhr von Luft aufweist, und dass der Filter (F) ein Filterbett (F13) mit beweglicher, körniger Filtermasse aus Zeolith, vorzugsweise Clinoptilolith, aufweist.

7. Vorrichtung nach Anspruch 6, **dadurch gekennzeichnet, dass** die körnige Filtermasse aus dem Zeolithmineral aus Clinoptilolith in einer Reinheit von mindestens 94 Gew% Clinoptilolith besteht.

8. Vorrichtung nach Anspruch 6, **dadurch gekennzeichnet, dass** die Elektroflockulationszelle (E) eine obere und eine untere Elektrode aufweist, die bewegbar sind, wobei die untere Elektrode ein Bett aus Metallteilchen aufweist und die obere Elektrode aus Metall mechanisch in Schwingungen zu versetzen ist.

9. Vorrichtung nach Anspruch 6, **dadurch gekennzeichnet, dass** der vorzugsweise rückspülbare Filter (F) einen Druckbehälter aufweist.

## Claims

1. Method for renovation of wastewater in which
- the wastewater is fed into an electro flocculation cell (E) and is subjected there to an electro flocculation,
- the electro flocculate (WF) treated in the electro flocculation cell is fed into a ripening tank (R) and remains there,
- the electro flocculate (WF) stemming from the ripening tank is filtered in a filter (F),
**characterized in that**
the flocculation cell (E) is formed by moveable electrodes and a bed of metal particles out of cast iron chips or out of magnesium granulate or out of aluminum granulate out of a chipped aluminum-magnesium granulate and with a supply means for wastewater (WO) and a drainage means for electro flocculate (WF), that
the electro flocculate (WF) is enriched with air in the ripening tank (R) before it is fed into the filter (F), and that
a filter bed (F14) with a moveable granular filter material out of zeolite, preferably clino-zeolite, is used in the filter (F).

2. Method according to claim 1, **characterized in that** the clino-zeolite is used with a purity of 94 weight%.

3. Method according to claim 1, **characterized in that** the dwell time of the electro flocculate (WF) in the ripening tank (R) amounts to 0,5 to 3 hours.

4. Method according to claim 1, **characterized in that** the water is advanced through the filter (F) under pressure.

5. Method according to claim 1, **characterized in that** an overpressure is built up in the filter (F) which is sufficient to press the electro flocculate (WF) through the filter bed.

6. Device for renovating of wastewater comprising:
an electro flocculation cell (E),
a ripening tank (R) arranged downstream of the flocculation cell (E),
a filter (F) arranged downstream of the ripening container,
**characterized in that**
the electro flocculation cell is formed with movable electrodes and a bed of metal particles out of cast iron chips or out of magnesium granulate or out of aluminum granulate out of a chipped aluminum-magnesium granulate and with a supply means for wastewater (WO) and a drainage means for electro flocculate (WF), that
the ripening tank (R) comprises an aeration element (R18) for an air supply, and that the filter (F) comprises a filter bed (F14) with a moveable granular filter material out of zeolite, preferably clino-zeolite.

7. Device according to claim 6, **characterized in that** the granular filter material out of zeolite mineral consists of clino-zeolite with a purity of 94 weight% of clino-zeolite.

8. Device according to claim 6, **characterized in that** the electro flocculation cell (E) comprises an upper and a lower electrode which are movable, wherein the lower electrode comprises a bed out of metal particles and the upper electrode out of metal is adapted to be oscillated mechanically.

9. Device according to claim 6, **characterized in that** the filter (F), which is preferably back-washable, comprises a pressure container.

## Revendications

1. Procédé en vue du traitement de l'eau sale, lors duquel
- l'eau sale est introduite dans une cellule d'électrofloculation (E) et y est soumise à une électrofloculation,
- l'électrofloculat (WF) traité dans la cellule d'électrofloculation est introduit dans un réservoir de maturation (R) et y séjourne, et
- l'électrofloculat (WF) provenant du réservoir de maturation est filtré dans un filtre (F),
**caractérisé en ce que**
la cellule d'électrofloculation (E) est constituée d'électrodes mobiles et d'un lit en particules métalliques de copeaux de fonte de fer, en granulés de magnésium, en granulés d'aluminium ou en un alliage d'aluminium-magnésium granulé, ainsi que d'une arrivée pour l'eau sale (WO) et d'une sortie pour l'électrofloculat (WF),
l'électrofloculat (WF) est enrichi en air dans le réservoir de maturation (R) avant d'être transporté dans le filtre (F),
et dans le filtre (F), un lit filtrant (F13) est utilisé avec de la masse mobile granuleuse en céolithe, de préférence de la clinoptilolithe.

2. Procédé selon la revendication 1, **caractérisé en ce que** la clinoptilolithe est utilisée dans une pureté d'au moins 94 % en poids de clinoptilolithe.

3. Procédé selon la revendication 1, **caractérisé en ce que** le temps de séjour de l'électrofloculat (WF) dans le réservoir de maturation (R) s'élève à d'environ 0,5 à 3 heures.

4. Procédé selon la revendication 1, **caractérisé en ce que** l'eau est transportée sous pression à travers le filtre (F).

5. Procédé selon la revendication 1, **caractérisé en ce que** dans le filtre (F) est établie une surpression qui suffit à refouler l'électrofloculat (WF) à travers le lit filtrant.

6. Dispositif en vue du traitement de l'eau sale, comprenant :
une cellule d'électrofloculation (E),
un réservoir de maturation (R) branché en aval de la cellule d'électrofloculation (E),
un filtre (F) branché en aval du réservoir de maturation,
**caractérisé en ce que**
la cellule d'électrofloculation (E) est constituée d'électrodes mobiles et d'un lit en particules métalliques en copeaux de fonte de fer, en granulés de magnésium, en granulés d'aluminium ou en un alliage d'aluminium-magnésium granulé, et présente une arrivée pour l'eau sale (WO) ainsi qu'une sortie pour l'électrofloculat (WF),
le réservoir de maturation (R) présente un élément de ventilation (R18) en vue de l'alimentation d'air, et **en ce que** le filtre (F) présente un lit filtrant (F13) avec de la masse mobile et granuleuse en céolithe, de préférence de la clinoptilolithe.

7. Dispositif selon la revendication 6, **caractérisé en ce que** la masse granuleuse en minéral de céolithe est constituée de clinoptilolithe dans une pureté d'au moins 94 % en poids de clinoptilolithe.

8. Dispositif selon la revendication 6, **caractérisé en ce que** la cellule d'électrofloculation (E) présente une électrode supérieure et une inférieure qui sont déplaçables, l'électrode inférieure présentant un lit en particules métalliques, et l'électrode supérieure en métal devant être mise mécaniquement sous vibrations.

9. Dispositif selon la revendication 6, **caractérisé en ce que** le filtre (F) de préférence lavable à contrecourant possède un réservoir sous pression.
